# EUROPÄISCHE PATENTSCHRIFT

(11) **EP 1 929 242 B1**
(45) Veröffentlichungstag und Bekanntmachung des Hinweises auf die Patenterteilung: **03.12.2008**
(21) Anmeldenummer: 06805745.4
(22) Anmeldetag: 18.09.2006
(51) Int. Cl.: G01C 15/02, G02B 5/12

(54) **ZWEISEITIGER REFLEKTOR UND ZWEISEITIGES ZIELOBJEKT**
TWO-SIDED REFLECTOR AND TWO-SIDED TARGET OBJECT
REFLECTEUR A DEUX FACES ET OBJET CIBLE A DEUX FACES

(30) Priorität: 29.09.2005 EP 05108999
(43) Veröffentlichungstag der Anmeldung: 11.06.2008
(73) Patentinhaber: Leica Geosystems AG, 9435 Heerbrugg (CH)
(72) Erfinder: WIEBKING, Mirko, CH-9435 Heerbrugg (CH); SCHORR, Christian, CH-9443 Widnau (CH); HINDERLING, Jürg, CH-9437 Marbach (CH)
(74) Vertreter: Büchel, Kaminski & Partner
(86) Internationale Anmeldenummer: PCT/EP2006/009046
(87) Internationale Veröffentlichungsnummer: WO 2007/036309

(56) Entgegenhaltungen:
- WO-A-95/30879
- US-A- 4 875 291
- PATENT ABSTRACTS OF JAPAN Bd. 1997, Nr. 06, 30. Juni 1997 (1997-06-30) -& JP 09 033256 A (KITSUTAKA KOGAKU KENKYUSHO:KK), 7. Februar 1997 (1997-02-07) in der Anmeldung erwähnt

## Beschreibung

Die Erfindung betrifft einen zweiseitigen Reflektor nach dem Oberbegriff des Anspruchs 1 und ein zweiseitiges Zielobjekt.

Im Vermessungswesen wird seit Jahrzehnten mit Distanzmessgeräten auf Reflektoren zur Definition der Messstrecke gemessen, wobei sich die Reflektoren in einer vorgegebenen Relativposition zu einem Messpunkt befinden. Auf diese Weise kann beispielsweise über den Reflektor die Relativposition zwischen dem Distanzmessgerät und dem Messpunkt, gegebenenfalls selbsttätig, bestimmt werden. Dabei werden von diesen Geräten ausgesendete elektromagnetische Wellen - beispielsweise Laserstrahlenbündel im infraroten oder sichtbaren Wellenlängenbereich - von den Reflektoren im Wesentlichen gerichtet zum Gerät zurück reflektiert.

Um die geforderte Zuverlässigkeit und/oder gewünschte Genauigkeit von geodätischen Messungen zu erreichen, kann ein Messpunkt aus mehr als einer Richtung angemessen werden. Dies erfolgt typischerweise auch bei der Vermessung und Überwachung langer Strecken, insbesondere im Verkehrswegbau, beispielsweise bei der Trassenführung von Eisenbahnen oder beim Bau von Strassentunnels, bei denen Messungen auf ein und denselben Messpunkt aus im Wesentlichen entgegengesetzten Richtungen durchgeführt werden. Eine Reflektor-Vorrichtung, die beidseitig bzw. sogar aus allen Azimutrichtungen angemessen werden kann, ist beispielsweise in der WO 95/30879 beschrieben.

Bei vielen Systemen des Stands der Technik werden gegenwärtig zwei Emissionsquellen mit unterschiedlichen Wellenlängen - zumeist im sichtbaren roten und unsichtbaren infraroten Bereich - verwendet. Dabei wird mit dem infraroten Strahl auf - im Allgemeinen von Hand gehaltene - Reflektoren oder reflektierende Folien als Zielobjekte oder Zielpunktmarkierungen gemessen. Die sichtbare Emission kommt hingegen bei der Anmessung von Oberflächen natürlicher Objekte zum Einsatz. Dies resultiert daraus, dass einerseits die Lasersicherheitsvorschriften im sichtbaren Wellenlängenbereich höhere Sendeleistungen erlauben und andererseits der anvisierte Messpunkt durch die sichtbare Strahlung auf dem natürlichen Objekt direkt identifizierbar ist. Zum Anmessen von Prismen oder retroreflektierende Folien ist die sichtbare starke Strahlung wenig geeignet, da wegen der hohen Reflektivität der Retroreflektoren der Benutzer am Gerät geblendet und bei der Arbeit irritiert wird. Mit einem sichtbaren Messstrahl im Pointermodus ist die Störung noch deutlicher. Weiters wird beim Anmessen von Retroreflektoren mit einem - im Allgemeinen eine beugungsbegrenzt kleine Divergenz aufweisenden - sichtbaren Messstrahl aufgrund der fehlenden Strahlaufweitung im Kurzdistanzbereich das Messlicht in den Sender zurückgeworfen, was sich negativ auf die Messgenauigkeit auswirkt. Der Einsatz von für reflektorlose Ziele optimierten Emissionsquellen ist aufgrund der stark ausgeprägten Retroreflexion für Prismen oder retroreflektierende Folien deshalb nur über grössere Entfernungen, z.B. ab 500 Meter, möglich.

Sollen Objekte oder Punkte in verschiedensten Entfernungen von Null oder Kurzdistanz bis über 500 Meter und auf verschiedene Oberflächen, die nicht notwendigerweise durch Reflektoren bereitgestellt werden, vermessen werden, so müssen im Stand der Technik zwei Sendeeinheiten/Emissionsquellen, insbesondere zwei Messstrahldivergenzen, und verschiedene Reflektoren verwendet werden.

Die Verwendung unterschiedlicher Reflektoren als Zielmarkierobjekte oder -hilfsmittel führt zu verschiedenen zieltypspezifischen (reflektorspezifischen) Distanzoffsets zwischen der gemessenen und der wahren Distanz. Die messtechnisch notwendige Korrektur erfolgt durch die Eingabe der jeweiligen Reflektor- oder Additionskonstanten. Aufgrund der räumlichen Anordnung der Reflektor-Oberfläche gegenüber der Bezugs- oder Referenzachse der Distanzmessung und/oder optischer Effekte durch die Morphologie der Oberfläche muss die gemessene Distanz korrigiert werden. Dabei erfordert der Wechsel zwischen den zwei Sendeeinheiten auch unterschiedliche Additionskonstanten, die zudem wiederum für die verschiedenen Oberflächen oder Reflektortypen differieren. Die Handhabung mehrerer sowohl geräte- als auch zielobjektabhängiger Additionskonstanten birgt eine Vielzahl von Fehlermöglichkeiten und gestaltet ein Verfahren komplex und zeitaufwändig.

Bisher mussten - bei einem komplexen Aufbau des Messgerätes mit zwei Sendeeinheiten, insbesondere zwei Wellenlängen, - entweder diese Nachteile in Kauf genommen werden, oder aber es erfolgte die Reduzierung auf eine Wellenlänge, z.B. um den Gerätebenutzer nicht zu blenden auf den infraroten Bereich, was aber aus lasersicherheitstechnischen Gründen Einschränkungen bzgl. der vermessbaren Distanzen bedingt und die Zahl der zu verwendenden Additionskonstanten zwar verringert, aber das Erfordernis deren Berücksichtigung nicht vollständig eliminiert.

Zudem existiert eine Vielzahl von Entfernungsmessern bzw. geodätischen Geräten mit solchen Entfernungsmessern, welche nur ein einziges beugungsbegrenztes optisches Strahlenbündel als Messstrahl emittieren. Dies ist beispielsweise bei Geräten der Fall, welche für reflektorlose Messungen ausgelegt sind und die daher aufgrund des geringen Reflexionsvermögens der zumeist angemessenen natürlichen Oberflächen einen Strahl mit möglichst geringem Strahlquerschnitt und hoher Intensität verwenden. Solche Geräte sind damit speziell ausgelegt und nur mit einem einzigen Messstrahl zur Entfernungsmessung ausgerüstet, welcher auf reflektorlose Ziele optimiert ist. Diese Optimierung bedeutet im Regelfall einen beugungsbegrenzten Strahl mit möglichst kleinem Strahlquerschnitt. In einigen Anwendungsfällen ist es jedoch wünschenswert, auch für solche Geräte mit reflektorlos-messend ausgelegten Entfernungsmessern einen Reflektor nutzen zu können. Beispielsweise kann durch einen Reflektor als Zielmarkierung die Messgenauigkeit gesteigert werden, zumal dann auch der Messort genau definiert ist, was insbesondere bei mittleren und grösseren Distanzen vorteilhaft ist.

Zudem sind die Geräte aufgrund ihres Anwendungsbereichs der Vermessung natürlicher Oberflächen nicht für umstellbare Additionskonstanten ausgelegt, da bei natürlichen Oberflächen kein Distanzoffset, d.h. keine Additionskonstante auftritt.

Die Problematik besteht somit darin einen Reflektor bereitzustellen, der für ein Instrument geeignet ist, welches aber für reflektorlose Messungen konzipiert/optimiert ist, woraus sich für reflektornutzende Messungen problematische Anforderungen ergeben. Mit einem Standardreflektor ist zudem die erforderliche geodätische Messgenauigkeit in der Regel nicht gegeben. Eine genaue Messung ist, wie oben bereits erwähnt, durchwegs nur für Distanzen ab 500m möglich.

Aus der JP09033256 ist ein 2-seitiger Reflektor bekannt, der 2 gleichartige Retroprismen aufweist. Diese Vorrichtung hat eine Additionskonstante ungleich Null und ist für reflektorlos-messend ausgelegte Entfernungsmesser nicht nutzbar, da deren geringer Strahlquerschnitt auf grössere Entfernungen nicht hinreichend genau bzw. nicht hinreichend stabil auf die Retroprismen mit ihrem kleinen Querschnitt ausgerichtet werden kann. Zudem ist die erzielbare Messgenauigkeit aufgrund potentieller Fehlzielungen des Laserstrahls mit kleinem, beugungsbegrenztem Durchmesser nur gering. Es ist kaum möglich mit einem beugungsbegrenzten Laserstrahl die Mitte oder die Apertur eines einzigen Reflektors mit einem einzigen Reflexionszentrum zu treffen. Auch wird eine genaue Zielung durch Luftturbulenzen dauernd gestört. Zudem tritt bei Anzielung unter einem Azimut- oder Elevations-Winkel verschieden von Null aufgrund der Parallaxe ein negativer Einfluss auf. Dieser Störeffekt ist bei Standard-Retroprismen in der beschriebenen räumlichen Anordnung mit Prismenecken auf der zu markierenden Achse besonders ausgeprägt.

Die US 4,875,291A beschreibt einen Reflektorhalter mit 2 Drehachsen zur Ausrichtung einer 2-seitigen Zieltafel mit nur einem montierbaren Reflektor. Die Zieltafel und ein kardanisches 2-Achsensystem werden zur Grobanzielung genutzt, wobei lediglich die Zieltafel 2-seitig ausgebildet ist. Der Retroreflektor muss hingegen umgeschraubt werden. Aufgrund des erwähnten eingeschränkten Winkelbereichs von Retroreflektoren ist die kardanische Ausrichtung besonders wichtig.

Auch aus der US 5,231,539A ist eine herkömmliche Lösung mit Retroprisma bekannt, bei der das Retroprisma in einer Halterung auf die Tripodachse justiert werden kann. Die Additionskonstanten sind daher nicht mehr Null, hingegen aber ist die seitliche Lage des durch den Nodal Point definierten Zielmarkierpunkt unabhängig von der Ausrichtung des Reflektors zur Position des Distanzmessers. Die erwünschte laterale Punktgenauigkeit wird hierbei auf Kosten der Additionskonstante erreicht.

In der US 4,470,664 wird eine Reflektorvorrichtung mit einstellbarer Additionskonstante für Entfernungsmesser ohne verstellbare bzw. softwareseitig konfigurierbarer Additionskorrektur beschrieben. Dabei können in einem Reflektorhalter Retroprismen in wenigstens 2 Abständen zur Referenzachse plaziert und befestigt werden. Auch diese Reflektoreinheit ist weder zweiseitig noch geeignet für reflektorlose Distanzmesser mit kleinem beugungsbegrenzten Strahl.

Die Aufgabe der Erfindung liegt in der Bereitstellung eines Reflektors, welcher gattungsgemäss genaue Messungen, insbesondere Distanzmessungen, ermöglicht, ohne dass Additionskonstanten berücksichtigt und verwaltet werden müssen.

Eine weitere Aufgabe der Erfindung ist, einen Reflektor für Messungen, sowohl im Nah- als auch im Fernbereich, mit einer einzigen Emissionsquelle, insbesondere einer einzigen Emissionswellenlänge, bereitzustellen.

Eine weitere Aufgabe der Erfindung besteht in der Bereitstellung eines Reflektors, der aus einem grossen Azimut- und Elevations-Winkelbereich angemessen werden kann.

Eine weitere Aufgabe der Erfindung ist, einen Reflektor für Geräte mit einer beugungsbegrenzt emittierenden Strahlquelle, wie beispielsweise in Geräten mit reflektorlos-messend ausgelegten Entfernungsmessern, bereitzustellen.

Diese Aufgaben werden erfindungsgemäss durch die kennzeichnenden Merkmale des Anspruchs 1 oder der abhängigen Ansprüche gelöst bzw. die Lösungen fortgebildet.

Ein erfindungsgemässer Reflektor weist ein erstes und zweites Reflexionselement aus einem ersten und zweiten Material mit jeweils erstem und zweitem Brechungsindex und mit jeweils erster und zweiter Lichtverzögerungszeit auf, welche Reflexionselemente in Bezug auf eine Referenzachse des Reflektors angeordnet sind. Abhängig von Brechungsindex, Form, Dicke und Anordnung der Reflexionselemente ist denselben - für eine bestimmte Wellenlänge und/oder Divergenz optischer Strahlenbündel - eine Additionskonstante zuordenbar. Die Additionskonstante ist der Wert, um den eine Distanzmessung dadurch korrigiert werden muss, dass erstens der Messstrahl einen gewissen Weg in einer Materialschicht des jeweiligen. Reflexionselements zurücklegt und nicht in Luft, und dass zweitens aufgrund der räumlichen Anordnung der Reflexionselemente die Reflexionsebene der Strahlen und Bezugsebene der Distanzmessung im Allgemeinen nicht zusammenfallen. Der Endpunkt oder Bezugspunkt der zu vermessenden Distanz ist durch den Schnittpunkt der Zielachse des Distanz-Messgeräts mit der objektseitigen Bezugsebene definiert.

Auf den Reflektor gerichtete optische Strahlenbündel vorgegebener Wellenlänge und/oder Divergenz treten durch eine erste bzw. zweite Durchtrittsfläche des ersten bzw. zweiten Reflexionselements, legen im ersten bzw. zweiten Material einen gewissen Weg zurück und werden schliesslich - im Wesentlichen in Einfallsrichtung - zurückreflektiert. Es versteht sich, dass gegebenenfalls, wie bei Spiegeln als Reflexionselemente, die Reflexion direkt an der Oberfläche erfolgt.

Der Bezugs-, Referenz- oder Endpunkt für Distanzmessungen fällt - insbesondere bei zwei Reflexionselementen - vorteilhaft mit dem geometrischen Schwerpunkt des Reflektors zusammen Die Referenzebene/Bezugsebene der Distanzmessung ist bei einem flächenartig gestalteten Reflektor bzw. flächenartigen Reflexionselementen eine zur Ebene der Reflexionselemente - bzw. einer Reflexionsebene derselben - im Wesentlichen parallele Ebene durch den Referenzpunkt. Als Referenzachse wird eine Achse (Lotrechte) durch den Referenzpunkt bezeichnet. Wenn im Folgenden Messungen zur Referenzachse definiert werden, so kann "Referenzachse" gegebenenfalls - z.B. bei flächigen Reflexionselementen - durch "Referenzebene" ersetzt werden, was aber für den Fachmann selbstverständlich ist.

Weiters verläuft die Referenzachse im Allgemeinen zwischen erstem und zweitem Reflexionselement, gegebenenfalls können die Reflexionselemente aber auch nebeneinander und vor der Referenzachse angeordnet sein.

Erfindungsgemäss ist bei senkrechter Ausrichtung der Referenzebene zum Messstrahl die Anordnung der Reflexionselemente bezüglich der Referenzebene - und der Referenzachse - derart, dass die Additionskonstante des jeweiligen Reflexionselements der Laufzeit der Strahlenbündel in Luft vom Reflexionselement zur Referenzebene und zurück entspricht: die Laufzeit der Strahlenbündel im ersten bzw. zweiten Material entspricht also einer doppelten Laufzeit der Strahlenbündel in Luft von einer Ebene der ersten bzw. zweiten Durchtrittsfläche zur Referenzebene. Damit diese Bedingung erfüllt ist, werden die Lage der Referenzebene - und somit auch der Referenzachse - sowie die Materialien der beiden Reflexionselemente gezielt gewählt und aufeinander abgestimmt. Durch diese erfindungsgemässe Ausbildung entsprechen Distanz-Laufzeitmessungen zu den Reflexionselementen des Reflektors - ohne Distanzkorrektur - jeweils Messungen zur Referenzebene/Referenzachse. Bei zwei identischen Reflexionselementen verläuft die Referenzachse vorteilhaft durch den - geometrischen und/oder gravitativen - Schwerpunkt des Reflektors bzw. der Reflektor-Anordnung. Auf die Referenzebene/-achse bezogene Distanzmessungen zum erfindungsgemässen Reflektor entsprechen - ohne Distanzkorrektur - im Wesentlichen Distanzmessungen auf ein natürliches Zielobjekt.

Bei reflektorlosen Instrumenten, wie sie heute mittlerweile als Hauptgruppe gattungsgemässer Theodoliten angewendet werden, ist eine Additionskonstante von Null eine spezifische Grösse, da diese dem Distanzoffset fast aller natürlichen Zielobjekte entspricht. Bei diesen Materialien ist die Eindringtiefe der Strahlung Null, was für andere, insbesondere künstliche Oberflächen, wie z.B. Styropor, nicht zutrifft. Reflektorlos-messend ausgelegte Geräte sind daher auf diesen Distanzoffset hin ausgelegt. Ein Reflektor, der für solche Geräte verwendet werden soll, muss dies berücksichtigen.

Weist der erfindungsgemässe Reflektor zwei - oder mehr - unterschiedliche Reflexionselemente auf, so sind die jeweiligen Reflexionselemente im Allgemeinen in unterschiedlichen Abständen zur Referenzachse erfindungsgemäss so angeordnet, dass Messungen auf die jeweilige Oberfläche Messungen zur Referenzachse entsprechen. Die Position der Anordnung ist über dem Fachmann bekannte Beziehungen festlegbar. Für die Bestimmung relevante Parameter sind beispielsweise der Brechungsindex des Reflektor-Materials, der zurückgelegte Weg des Messstrahls im Material, sowie die Wellenlänge des Messstrahls. Während bei handelsüblichen Reflektoren die Korrektur bezüglich der Additionskonstante des Reflexionselements berücksichtigt werden muss, erfolgt diese Berücksichtigung erfindungsgemäss bereits direkt am Reflektor. Durch die erfindungsgemässe Ausbildung weist der Reflektor bzw. die Reflexionselemente - mit einer Additionskonstante von 0 mm - sozusagen die Eigenschaften natürlicher Oberflächen bezüglich. Distanzmessungen auf. Mit dieser absoluten Additionskonstante von 0 mm erübrigt sich eine Korrektur, sodass Messungen mit Strahlen vorgegebener Wellenlänge im Auswerteverfahren direkt Distanzmesswerte zur Bezugsachse des Reflektors liefern.

Der erfindungsgemässe Reflektor weist wenigstens zwei, gegebenenfalls mehrere, flächige Reflexionselemente auf. Für flexible Einsätze ist der erfindungsgemässe Reflektor mit unterschiedlich gestalteten Reflexionsflächen bereitstellbar.

Durch diese flächenhafte oder flächige Ausgestaltung, insbesondere mit einer Vielzahl von Reflexionspunkten oder Reflexionszentren, d.h. als zweidimensionale Anordnung einer Vielzahl von Aperturen, insbesondere aneinander anschliessende und so die Fläche weitgehend abdeckende Aperturen oder Reflexionspunkte, können auch beugungsbegrenzte Strahlenbündel mit ihrem kleinen Strahlquerschnitt über grössere Distanzen verwendet werden. Durch die erfindungsgemässe Ausgestaltung der Oberflächen, insbesondere durch die Vielzahl von einzelnen Reflexionspunkten, wie z.B. von Prismen oder Tripeln, wird das Strahlenbündel bei der Reflexion zudem homogenisiert, was die Distanzmessgenauigkeit zusätzlich steigert. Das flächenhaft ausgebildete Zielobjekt bewirkt aufgrund der vielen kleinen Prismen oder Reflexionselemente eine Überlappung bzw. Wirkungsquerschnitt mit dem kleinen, beugungsbegrenzten Laserstrahl. Auch bei einer Fehlausrichtung wird der flächenhafte Reflektor noch effizient getroffen.

Parallaxenfehler wirken sich im Vergleich zu herkömmlichen Lösungen mit Retroprismen wesentlich geringer aus, da der Abstand der Oberflächen zur Referenzachse aufgrund der flachen Gestalt der Reflexionselemente viel kleiner ist. Flächig ausgebildete Reflektorflächen können somit näher zur Referenzachse plaziert werden, so dass die Additionskonstante Null und gleichzeitig die Genauigkeit der seitlichen Lage (horizontal/vertikal) hoch ist. Die Genauigkeit der seitlichen Lage wird durch das seitliche Wegwandern des Flächenschwerpunkts bestimmt, falls die Ausrichtung in Azimut- und Elevation nicht gewährleistet ist. Wegen der dünnen, flächenhaften Ausprägung der Reflexionselemente ist der seitliche Markierfehler zu Referenzachse im sub-mm- bis max. mm-Bereich und daher immer noch geodätisch genau. Der besonders ausgeprägte Fehlrichtfehler - bekannt bei Fehlzielung auf Einzelprismen - tritt wegen der homogenisierenden optischen Wirkung durch die flächigen Reflexionselemente nicht auf.

Für Anwendungen mit doppelseitig identischer Anmessung, wie sie beispielsweise innerhalb von Tunnels erforderlich ist, kann eine Ausgestaltung des Reflektors mit zwei identischen Seiten erfolgen.

Für andere Anwendungen ist es vorteilhaft, wenn zumindest zwei Seiten mit unterschiedlicher Reflexionscharakteristik vorhanden sind. Eine Seite wird dabei mit einem ersten Reflexionselement mit sehr hohem Reflexionsgrad für grosse Distanzen ausgelegt, z.B. mittels Katzenaugen, so dass auch Messdistanzen jenseits der 1000 Meter realisiert werden können. Katzenaugen, die z.B. aus einer Vielzahl kleiner, flächig aneinandergereihter Tripel oder Prismen bestehen, können beispielsweise in Kunststoff-Spritzgusstechnik ohne grossen Aufwand hergestellt werden.

Die andere Seite wird mit einem zweiten Reflexionselement niedriger Reflektivität ausgelegt. Der Reflexionskoeffizient der beiden Seiten kann sich dabei um mehr als eine Grössenordnung unterscheiden. Beispielsweise ist das zweite Reflexionselement mit retro-reflektierenden Folien oder Tapes, z.B. mit Glaskugeln oder diamantartiger Wabenstruktur, ausführbar. Auf solchen Folien können beispielsweise auch strich- oder linienartige Markierungen des Zentrums angebracht werden, die für eine präzise Anzielung bei Tag geeignet sind. Bei Katzenaugen entstehen für solche Markierungen mehrere Reflexionsbilder mit seitlichem Versatz, so dass die präzise Anzielung erschwert und unter Umständen das eigentliche Strichkreuz nicht mehr eindeutig identifizierbar ist.

Die Kombination zweier Oberflächen mit Katzenauge und reflektierender Folie erlaubt eine Anpassung an unterschiedliche Messbedingungen.

Durch die Verwendung solcher Oberflächen kann bei der Entfernungsmessung auf die Verwendung eines divergenten Laserstrahls verzichtet werden. Während bei herkömmlichen Tripelprismen-Retroreflektoren je nach Anzielung zwischen einfallendem und reflektiertem Strahl ein Versatz auftritt, und - bei nicht divergierenden Laserstrahlen - der Empfänger dadurch oft nicht getroffen wird, tritt sowohl auf der Folie als auch am Katzenauge Retroreflexion ohne wesentlichen Strahlversatz auf, so dass der Empfänger - bei koaxialer Anordnung zum Sender - immer getroffen wird. Zudem ist die Rückstreukeule konisch, kegelförmig divergent und die Strahlung trifft problemlos den Empfänger.

Das Reflektivitätsverhältnis zwischen Katzenauge und Folie kann speziell abgestimmt werden. Katzenaugen sind mit einem Reflektionsgrad von > 20000 cd/1x/m² erhältlich, so dass eine Verwendung für Entfernungsmessungen bis 1000 m problemlos möglich ist. Für kürzere Entfernungen, z.B. bis ca. 100 m, kann die retro-reflektierende Folie verwendet werden, wobei diese bei einer gegenüber dem Katzenauge etwa 100fach schwächeren Reflexion, d.h. von ca. 200 cd/1x/m², aufgrund des invers-proportionalen Abstandsgesetzes optische Empfangssignale liefert, die denen des Katzenauges bei grösseren Entfernungen entsprechen. Damit wird ein Betreiben der Distanzmesseinheit bei zu schwachen oder zu starken Signalen vermieden, und weiter die Distanzmessgenauigkeit erhöht.

Durch eine solche zweiseitig unterschiedliche Ausgestaltung kann eine Übersteuerung der Distanzmesseinheit im Nahbereich vermieden werden. Das erste Reflexionselement, wie die Reflexfolie, ist daher insbesondere für Messungen kurzer Distanzen - z.B. bis einige 100 Meter - vorteilhaft einsetzbar, das zweite Reflexionselement, z.B. die "Katzenaugenseite", hingegen für mittlere und lange Distanzen bis über 1000 m.

Bei Verwendung von Folie/Tape für die "Nahbereich-Seite", ist eine Zentrumsmarkierung auf der Eintrittsseite der Folie/des Tapes präzise aufbringbar, beispielsweise sind solche Markierungen einfach und ohne störende spiegelnde Einflüsse, wie etwa Mehrfachbilder, aufdruckbar.

Weiter vorteilhaft ist Blendwirkung, insbesondere im Nahbereich, vermeidbar. Bei Distanzmessern mit sichtbarer Strahlung würde eine Zielung auf das Katzenauge bei kurzen Distanzen den Benutzer blenden und bei der Arbeit irritieren, hingegen ist bei Zielung auf die retroreflektierende Folie der sichtbare Rückreflex erheblich schwächer und dessen Helligkeit dem Auge angepasst.

Geeignete Folien sind dabei mit Reflexionsgraden von 50 bis 5000 cd/1x/m² verfügbar, wobei grundsätzlich zwei handelsübliche Typen unterschieden werden können: Ausführungen mit Glaskugeln und solche mit Diamant- oder Tripelstrukturen als Retrospiegel. Folien mit Tripelstrukturen zeigen ein periodisches zweidimensionales Gitter, so dass hierdurch Beugungsstrukturen mit chromatischem Effekt entstehen können. Dieser Effekt bewirkt unter anderem Modenselektionen, welche zu Distanzmessfehlern führen können. Bei Folien mit Glaskugeln sind die Kugeln statistisch verteilt, so dass weder geordnete Beugungseffekte noch relevante chromatische Störungen auftreten und die Entfernungsmessung hierdurch unbeeinflusst bleibt.

Es versteht sich, dass anstelle von reflektiven Folien und Katzenaugen genauso andere bekannte retroreflektive Mittel, wie z.B. Tripelprismen-Retroreflektoren, einsetzbar sind. Ebenso kann der Reflektor mit im Wesentlichen gleichen Elementen mit unterschiedlichem Reflexionsgrad - z.B. zwei verschieden stark reflektierende Folien - ausgebildet werden. Weiters sind mehr als zwei Reflexionsflächen vorsehbar. Ebenso kann ein kugelförmiger Reflektor erfindungsgemäss ausgebildet werden, wobei die Reflexionselemente z.B. aneinander anschliessend angeordnet bzw. miteinander verbunden sind. Es versteht sich, dass grundsätzlich Reflektoren beliebiger Geometrien erfindungsgemäss ausbildbar sind.

Mit einem, wenigstens zweiseitigen, für den Nahdistanz- und Ferndistanz-Messbereich kombiniert einsetzbaren Reflektor ist es möglich, Messungen auf unterschiedliche Distanzen mit einer einzigen Sendeeinheit bzw. mit Strahlung eines Wellenlängenbereichs durchzuführen. Durch die bezüglich Reflexionsverhalten/Reflexionsgrad entsprechend gewählten Reflexionselemente ist ein- und dieselbe Sende- und Empfangseinrichtung in Kombination mit dem erfindungsgemässen Reflektor für Messungen sowohl auf gattungsgemäss nahe als auch ferne Distanzen einsetzbar.

Die Notwendigkeit, in einem Messgerät, wie einem Tachymeter, zwei Sende-/Empfangseinrichtungen für unterschiedliche Strahldivergenzen und/oder Wellenlängenbereiche - z.B. einen beugungsbegrenzten Laser im sichtbaren und einen divergente Strahlung emittierenden Laser im infraroten Wellenlängenbereich - zu integrieren, besteht mit dem erfindungsgemässen zweiseitigen Reflektor nicht mehr. Damit wird auch eine bedeutende Kostenreduktion in der Ausbildung entsprechender Messgeräte erreicht. So können beispielsweise die beiden Laser in einem Tachymeter auf eine einzige, vorzugsweise im sichtbaren oder infraroten Wellenlängenbereich emittierende, Laserdiode mit einer einzigen, insbesondere beugungsbegrenzten, Bündelkollimation reduziert werden.

Der erfindungsgemässe zweiseitige Reflektor wird nachfolgend anhand von in der Zeichnung schematisch dargestellten Ausführungsbeispielen rein beispielhaft näher beschrieben. Im Einzelnen zeigen
- Fig. 1: ein Beispiel für einen Reflektor nach dem Stand der Technik;
- Fig. 2: schematisch eine Ausführungsform eines erfindungsgemässen Reflektors mit zwei identischen Reflexionselementen;
- Fig. 3: schematisch eine Ausführungsform eines erfindungsgemässen Reflektors mit zwei unterschiedlichen Reflexionselementen;
- Fig. 4: in zwei Teilfiguren eine Ausführungsform eines erfindungsgemässen zweiseitigen Zielobjekts;
- Fig. 5: in zwei Teilfiguren eine Ausführungsform eines erfindungsgemässen, um zwei Drehachsen drehbaren, Zielobjekts.

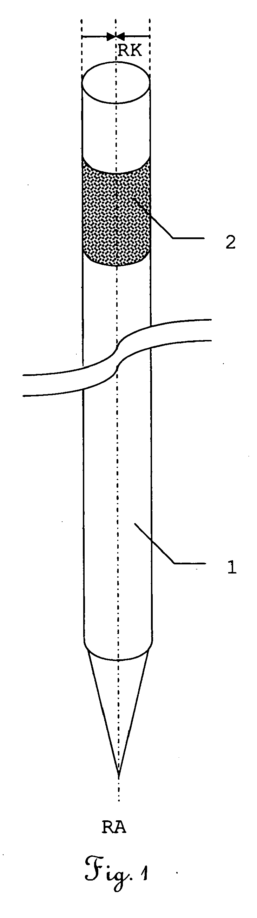

Die Grössenverhältnisse in den Darstellungen der Figuren 1 bis 4 sind nicht als massstäblich zu betrachten.

Fig. 1 zeigt eine typische Darstellung eines Reflektors, wie er heute für viele Anwendungen eingesetzt wird. Eine ähnliche Anordnung ist in der WO 95/30879 dargestellt. Der Reflektor ist als 360°-Reflektor mit um einen zylinderförmigen Reflektorstab 1 angeordneter reflektiver Folie 2 ausgebildet. Derartige Reflektoren werden häufig eingesetzt, da sie Messungen aus verschiedenen Richtungen - hier z.B. horizontal in einem Winkelbereich von 360° - erlauben. Der Reflektor wird mittels des Reflektorstabs 1 in definierter Beziehung zu einem Zielpunkt aufgestellt und angemessen. Im Allgemeinen wird der Stab mit seinem spitzen Ende über einem Zielpunkt aufgestellt. Die Referenzachse RA oder "Markierachse" als Zielachse einer Entfernungsmessung verläuft durch den geometrischen Reflektor-Schwerpunkt und die Spitze des Stabes. Mittels der reflektiven Folie 2 wird der auftreffende Strahl im Wesentlichen in Einfallsrichtung zurückgeworfen.

Für Distanzmessungen auf die reflektive Folie 2 mit der Referenzachse RA als Bezugsachse der Distanzmessung ist aufgrund des Offsets zwischen der Referenzachse RA als Soll-Bezugsachse und einer "Reflexionsachse" als Ist-Bezugsachse eine Additionskonstante oder Reflektorkonstante RK zu berücksichtigen. Dabei wird die - positive oder negative - Reflektorkonstante RK als Korrekturwert zur gemessenen Zeit bzw. zur ermittelten Distanz addiert.

Diese Reflektorkonstante RK ist von mehreren Faktoren abhängig. Einerseits ist sie abhängig vom Abstand zwischen reflektiver Folie 2 und Referenzachse RA, andererseits von der räumlichen Form und Ausrichtung des vom Laserbündel ausgeleuchteten Flächenbereichs relativ zum Messstrahl. Als Reflexionsort wirkt der mit der Messstrahlung gewichtete Flächenschwerpunkt. Dieser kann neben, vor oder hinter der Referenzachse RA liegen. Obwohl in diesem Fall ein Offset von der Aufstellung abhängig ist, wird als Additionskonstante die Strecke zwischen Reflexionsort und der Referenzachse RA bezeichnet. Weiters ist auch bei im Wesentlichen flächigen Reflektoren, wie der reflektiven Folie 2, eine gewisse räumliche Ausdehnung senkrecht zur Fläche gegeben. Die Laufzeit des Messstrahls im Reflektormaterial ist für eine bestimmte Emissionswellenlänge abhängig von der Ausdehnung/Dicke und Form des Materials, sowie der Art desselben - charakterisiert durch den Brechungsindex.

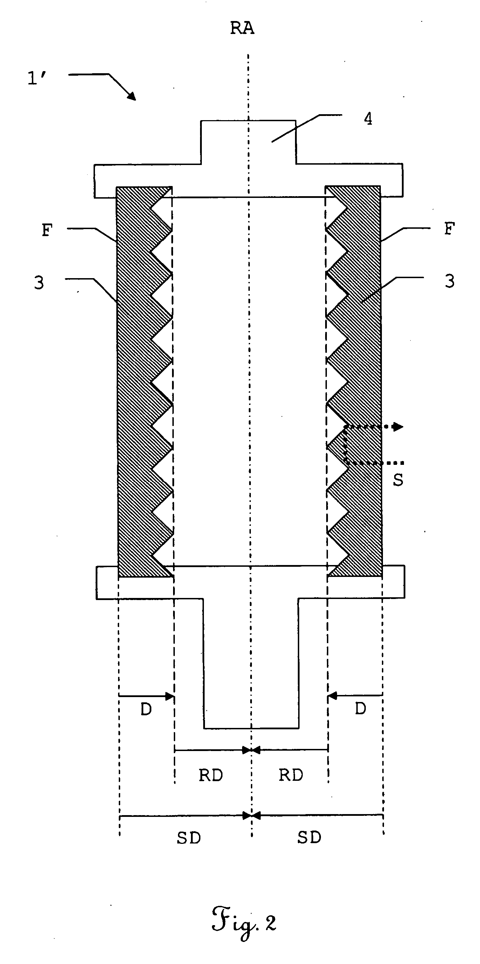

In Fig. 2 ist eine Ausführungsform eines erfindungsgemässen zweiseitigen Reflektors 1', welcher zwei identische Reflexionselemente mit identischen Additionskonstanten aufweist, gezeigt. Die Reflexionselemente sind mittels einer Fassung 4 eines - in der Ansicht nicht dargestellten - Rahmens bezüglich der Referenzachse RA des Reflektors 1' angeordnet. Die beiden Reflexionselemente sind als Katzenaugen-Reflektoren 3 ausgebildet, deren beide Durchtrittsflächen F parallel zur Referenzachse RA und zueinander angeordnet sind. Die Struktur der Katzenaugen-Reflektoren 3 besteht aus vielen kleinen pyramidenförmigen verspiegelten Vertiefungen einer Kunststoffoberfläche. Die Strukturen können natürlich genauso präzise aus bzw. in Glas oder andere/n Materialien geschliffen oder ausgeformt sein. Die Strukturen der Katzenaugen haben die Eigenschaft, einfallende Strahlenbündel in Einfallsrichtung zurückzusenden. Derartige retroreflektive Komponenten erleichtern die Detektion eines reflektierten Strahles. Insbesondere kann derselbe mit einem koaxial zum Sender angeordneten Empfänger detektiert werden. Beispielsweise mittels der Signal-Laufzeit ist dann in bekannter Art und Weise ein Distanzwert ermittelbar.

Erfindungsgemäss ist der Reflektor 1' nun derart ausgebildet, dass die beiden Katzenaugen-Reflektoren 3 als erste und zweite Reflexionskomponente bezüglich der Referenzachse RA so angeordnet sind, dass die Summe von Reflektordicke D und von Reflektordistanz RD der jeweiligen Reflexionskomponenten zur Referenzachse RA der Signaldistanz SD jeweiliger Signale S entspricht. Unter Signaldistanz SD ist die der Laufzeit der Signale S in Luft entsprechende Distanz zu verstehen. Das Signal S ist hier insbesondere ein Infrarot-Laserstrahl. Das auf den Katzenaugen-Reflektor 3 auftreffende Signal S tritt durch die Durchtrittsfläche F, legt im Reflektor-Material der Dicke D einen von der Dicke D und Struktur des Materials abhängigen Weg zurück, und verlässt den Katzenaugen-Reflektor 3 als reflektiertes Signal. Durch die erfindungsgemässe Ausbildung und Anordnung des Katzenaugen-Reflektors 3 entspricht die Laufzeit des Signals S im Material der doppelten Laufzeit des Signals S zwischen Durchtrittsfläche F und Referenzachse RA des Reflektors in Luft. Die Laufzeit des mittels einer Empfangseinrichtung empfangenen vom Katzenaugen-Reflektor 3 reflektierten Signals S entspricht also der Laufzeit eines am Ort der Referenzachse RA - bzw. einer Ebene der Referenzachse RA - reflektierten Signals derselben Wellenlänge. Damit kann die Distanzmessung ohne Zwischenkorrektur auf die Referenzachse RA bezogen werden, also analog zu einer Distanzmessung auf ein natürliches Zielobjekt. Fehlerhafte Distanzmessungen durch Verwechslung von Zieltypkonfigurationen oder Unterlassen der entsprechenden Offsetkorrektur werden so vermieden.

Eine solcher Reflektor 1' mit zwei identischen Katzenaugen-Reflektoren 3 eignet sich besonders für Anwendungen, bei denen ein Zielpunkt bzw. der Reflektor 1' aus zwei entgegengesetzten Richtungen angemessen wird, wie beispielsweise beim Strassen- oder Tunnelbau.

Eine Weiterbildung der Ausführungsform sieht vor, die Reflektoren bzw. die Reflexionskomponenten um die Referenzachse RA drehbar auszubilden. Z.B. ist die Referenzachse RA als Welle ausgebildet, um welche die Reflexionselemente - oder gegebenenfalls ein den Reflexionselementen zugeordneter Rahmen - drehbar gelagert sind. Damit können die Reflexionselemente horizontal - vorzugsweise um 360° - gedreht werden und sind aus verschiedenen horizontalen Richtungen anmessbar. Um eine vorgegebene Stellung zu halten, ist eine Befestigungseinrichtung vorsehbar oder auch einfach eine reibschlüssige Lagerung. Weiters kann ein Reflektorrahmen so ausgebildet werden, dass Reflexionselemente in den Rahmen einsetzbar und aus diesem entnehmbar sind. So kann beispielsweise je nach Bedarf zwischen hochreflektiven und schwächer reflektiven Elementen gewechselt werden.

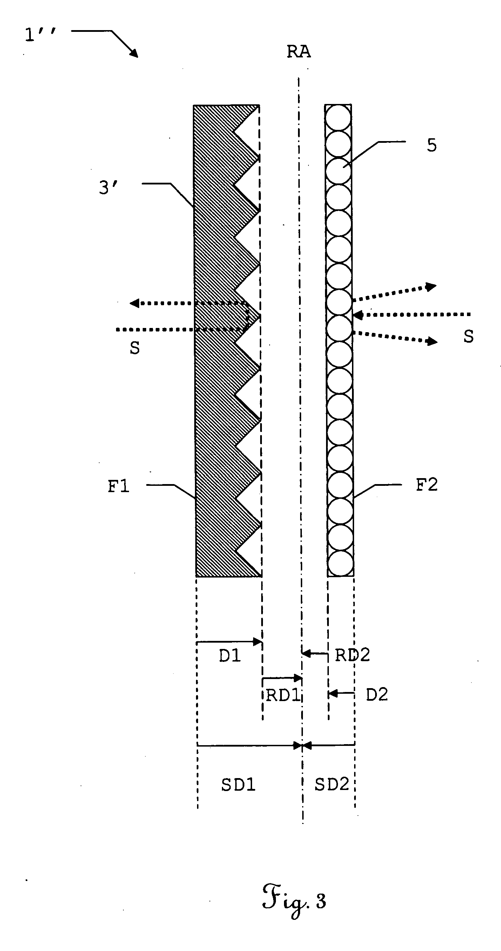

Die Darstellung von Fig. 3 zeigt eine zweite Ausführungsform eines erfindungsgemässen zweiseitigen Reflektors 1" mit zwei unterschiedlichen Reflexionselementen. Das erste Reflexionselement ist ein Katzenauge 3' mit einer Schicht der Dicke D1 in Glas geschliffener Strukturen, wobei selbstverständlich genauso Katzenaugen mit in Kunststoff gespritzten Strukturen einsetzbar sind. Das zweite Reflexionselement ist eine Reflexfolie mit einer Schicht der Dicke D2 stochastisch verteilter, kleiner Glaskügelchen 5. Die Glaskügelchen 5 reflektieren das auftreffende Signal S mit einer geringen Streuung, beispielsweise von 0.2° bis 1°, in Einfallsrichtung. Die Durchtrittsflächen F1,F2 der beiden Reflexionselemente sind wiederum im Wesentlichen parallel zueinander und zur Referenzachse RA angeordnet. Erfindungsgemäss ist die Anordnung derart, dass sich für beide Seiten des Reflektors 1' absolute Additionskonstanten von Null ergeben. In diesem Ausführungsbeispiel ist aufgrund der unterschiedlichen Materialien und Schichtdicken die Reflexfolie etwas näher zur Referenzachse RA angeordnet als das Katzenauge 3'. Für beide Seiten gilt, dass die jeweilige Signaldistanz SD1, SD2 der jeweiligen Laufzeit in den Materialien der Dicken D1,D2 entspricht. Die Zeitdifferenz zwischen Ein- und Austritt des Signals S durch die Durchtrittsflächen F1,F2 der Schichten entspricht also der Laufzeit des Signals S in Luft von der Durchtrittsfläche F1,F2 über die Referenzachse RA zur Durchtrittsfläche F1,F2. Zum Erreichen dieser Eigenschaft variierbare Parameter der jeweiligen Reflexionselemente sind beispielsweise Schichtdicke, Strahlführung in der Schicht, Brechungsindex der Schicht und Schichtabstand RD1, RD2 zur Referenzachse RA.

Der Reflektor 1" weist also beidseitig - sowohl auf der Seite mit dem Reflexfolien-Reflexionselement, als auch auf der Seite mit dem Katzenaugen-Reflexionselement - eine absolute Additionskonstante von 0 mm auf, entspricht also sozusagen der Oberfläche eines natürlichen Ziels am Ort der Referenzachse RA. Zu beiden Oberflächen können auf die Referenzachse RA bezogene Distanzmessungen ohne Korrektur durchgeführt werden.

Die beiden Reflexionselemente weisen ein unterschiedliches Reflexionsverhalten auf. Durch die Ausbildung der Reflexionselemente ist die Stärke des rückreflektierten Signals beeinflussbar. So ist die Reflexion der Reflexfolie um einen Faktor von etwa 100 schwächer als die Reflexion der retroreflektiven Glastripel des Katzenauges 3'. Damit ist ein Reflektor 1" realisiert, der sowohl für Messungen im Nah- als auch im Fernbereich einsetzbar ist. Dabei wird für Messungen auf kurze Distanzen anstelle der KatzenaugenSeite die schwächer reflektierende Folienseite zum Messgerät ausgerichtet werden. Durch die Bereitstellung zweier, unterschiedliches Reflexionsvermögen aufweisender, Oberflächen können die Messungen mit einem Signal S derselben Wellenlänge/Intensität durchgeführt werden. Durch die Messung auf ein hochreflektives Ziel im Fernbereich und auf ein schwächer reflektives Ziel im Nahbereich liegen die Empfangssignale in etwa im selben Aussteuerbereich eines Empfängers. Damit sind Messgenauigkeiten im sub-mm Bereich erreichbar. Beim Einsatz sichtbarer Laserstrahlung ist die eingegrenzte Signaldynamik zusätzlich mit dem Vorteil behaftet, dass der "Messfleck" der Strahlung auf dem Reflektor für einen Benutzer mit ausgeglichener Helligkeit wahrnehmbar ist und diesen, insbesondere im Nahbereich, nicht blendet. Da in Kombination mit dem erfindungsgemässen Reflektor Geräte mit einer einzigen Strahlungsquelle und einer einzigen, insbesondere beugungsbegrenzten, Strahldivergenz einsetzbar sind, ist der "Messfleck" und somit die räumliche Genauigkeit der Zielung der Reflektormitte überprüfbar und Falschmessungen bei Fehlzielungen vermeidbar.

Es ist selbstverständlich, dass das gewählte Reflektivitätsverhältnis der Reflexionselemente der gewünschten Anwendung entsprechend, bzw. je nach Sender/Empfänger abgestimmt werden kann. Weiters ist der Reflektor mit austauschbaren Reflexionselementen, beispielsweise mit unterschiedlichem Reflexionsgrad, ausbildbar und ausstattbar. Der erfindungsgemässe zweiseitige Reflektor könnte beispielsweise mit einem Satz austauschbarer Reflexionselemente, z.B. mit Schnapp-Fassung, auf- und umgerüstet werden.

Genauso können austauschbare Reflexionselemente mit weiteren Eigenschaften vorgesehen werden, z.B. eingefärbte Elemente. Nachdem z.B. die Sichtbarkeit von roter Laserstrahlung auf einem rot eingefärbten Reflexionselement deutlich erhöht ist, ist ein solches eingefärbtes Element, insbesondere bei starkem Tageslicht, vorteilhaft einsetzbar.

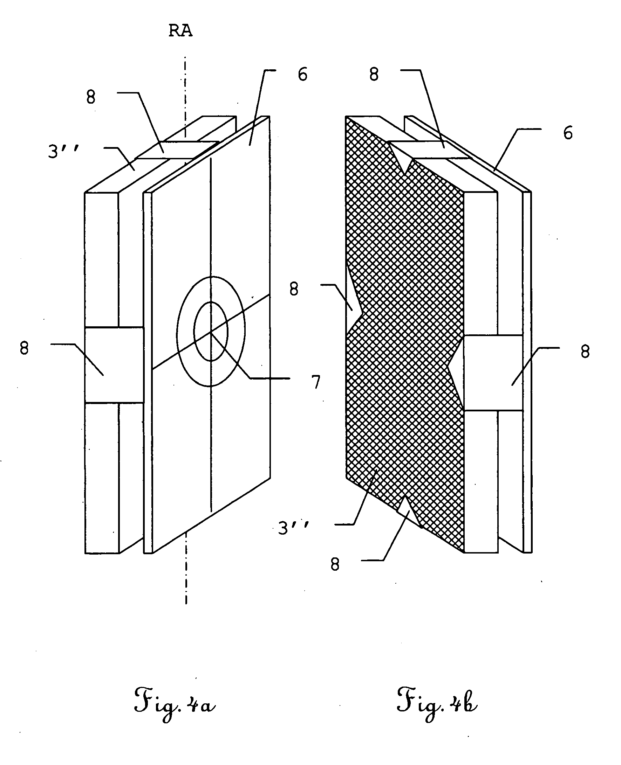

Fig. 4a und 4b zeigen ein zweiseitiges Zielobjekt mit einem Reflektor der Art, wie er schematisch in Fig. 3 dargestellt ist, in zwei dreidimensionalen Ansichten. In Fig. 4a ist eine Seite des Zielobjekts mit reflektiver Folie 6 gezeigt. Auf der Folie 6 aufgebracht sind hier ausserdem Linien und Kreise zur präzisen Markierung des Zielzentrums 7, hauptsächlich für nahe Distanzen.

Fig. 4b zeigt die andere Seite des Zielobjekts mit einem Katzenauge 3". Auch diesem sind Markierungselemente 8 zugeordnet - ein mittiges Markierungselement 8 an jeder der vier Seiten der rechteckigen Reflektorfläche zur Bestimmung der Reflektormitte für ferne Distanzen. Die Markierungselemente 8 dienen weiters als Rahmenhalterungen, hier mit Schnapp-Verschluss, für den Reflexionselementen zugeordneten Rahmen. Das Zielobjekt ist um die Referenzachse RA angeordnet.

Eine Weiterbildung der Ausführungsform sieht vor, die Reflexionselemente bzw. das Zielobjekt um wenigstens eine, gegebenenfalls zwei, Drehachsen zu lagern. Eine Lagerung der Anordnung um eine vertikale erste Achse, vorzugsweise parallel zu den Durchtrittsflächen der Reflexionselemente und durch die Verbindungslinie zwischen den Flächenschwerpunkten der beiden Durchtrittsflächen, stellt die Funktion einer um z.B. 360° azimutal drehbaren Einheit, dar, die aus allen horizontalen Richtungen angemessen werden kann. Ein besonderer Vorteil dieser Ausführungsform des zweiseitigen Reflektors ist die Anmessung aus zwei entgegengesetzten Richtungen, diese spielt insbesondere bei Fluchtungsaufgaben (Alignment), Polygonzügen in Strassen oder bei Tunnelbauten, wo die Messaufgabe besonders stark liniengebunden ist, eine wichtige Rolle. Bei Aufstellung in der Mitte von Strassenkreuzungen werden 2 gegenüberliegende Strassenrichtungen abgedeckt, mit einer einzigen Verschwenkung um 90 Grad der azimutal drehbaren Einheit werden auch die anderen horizontalen Winkel zugänglich. Mit einer einzigen Manipulation sind daher alle horizontalen Richtungen anmessbar, was bei Gebrauch zu erheblicher Zeitersparnis führt. Die Lagerung um eine - auf die erste Drehachse senkrechte - horizontale zweite Achse, beispielsweise ebenfalls parallel zu den Durchtrittsflächen und die erste Drehachse schneidend, ermöglicht die Anmessung aus unterschiedlichen Höhen/Vertikalwinkeln. In diesem Fall stellt das orthogonale Achsenkreuz den Markierpunkt der Messstrecke mit Additionskonstante 0 mm dar.

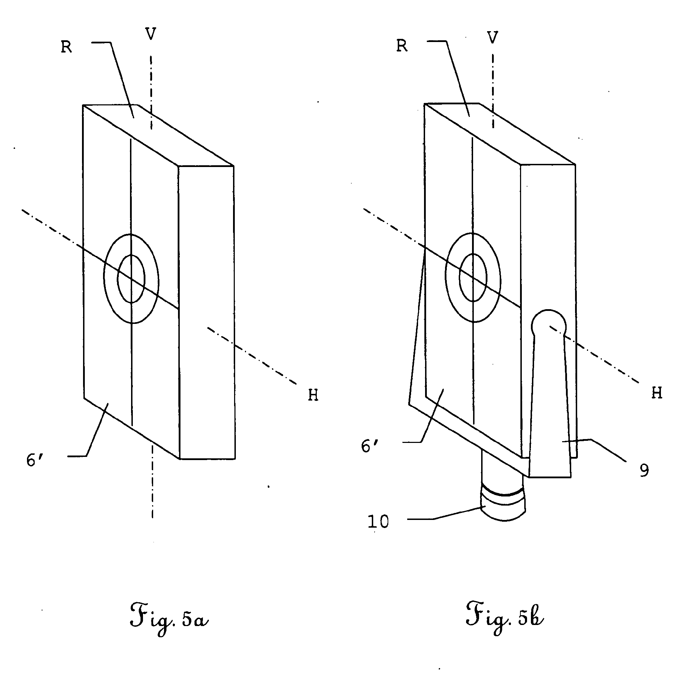

Fig. 5 zeigt in zwei Teilfiguren 5a und 5b ein Zielobjekt mit in bzw. an einem Rahmen R angeordneten Reflexionselementen. In der dargestellten Ansicht ist nur das zweite Reflexionselement - Reflexfolie 6' mit aufgebrachter Zielmarkierung gezeigt. Das erste Reflexionselement ist beispielsweise ein Katzenauge analog zu den Darstellungen der Figuren 3 und 4b. Hat die Reflexfolie 6' einen niedrigen Reflexionsgrad, z.B. 50 cd/1x/m², kann das zweite Reflexionselement auch als Reflexfolie mit hohem Reflexionsgrad, z.B. 5000 cd/1x/ m², ausgeführt sein.

In Fig. 5a sind eine horizontale Drehachse H, sowie eine vertikale Drehachse V des Zielobjekts skizziert. Die beiden Drehachsen verlaufen jeweils durch den geometrischen Schwerpunkt des Zielobjekts bzw. des Rahmens R und schneiden einander auf einer Verbindungslinie durch die Flächenschwerpunkte der Reflexionselemente, zudem ist die Ebene des Achsenkreuzes parallel zu den beiden Ebenen der Durchtrittsflächen. Ebenso können die Achsen durch den Massenschwerpunkt des Zielobjekts gelegt werden, um eine stabile, bezüglich Schwerkraft ausgewuchtete Positionierung/Aufstellung desselben zu ermöglichen.

Fig. 5b zeigt eine mögliche Ausführung eines drehbar gelagerten Zielobjekts. Zur drehbaren Lagerung um die horizontale Drehachse H ist der Rahmen R des Zielobjekts in einer Halterung 9 drehbar gelagert. Halterung 9 und Rahmen R sind derart ausgebildet, dass der Rahmen R in einer gewünschten Position, beispielsweise mittels einer Rutschkupplung, fixierbar ist. Die Drehung um die vertikale Achse wird durch einen mit der Halterung 9 verbundenen Adapter 10 mit Gleitlager ermöglicht. Mit dem Adapter 10 kann das Zielobjekt beispielsweise auch drehbar auf ein Stativ aufgesetzt werden.

## Patentansprüche

1. Zweiseitiger geodätischer Reflektor zur Reflexion eines beugungsbegrenzten optischen Strahlenbündels, insbesondere für die geodätische, bautechnische und industrielle Vermessung mit reflektorlos-messend ausgelegten Entfernungsmessern, mit
- einem flächigen ersten Reflexionselement mit einem einen ersten Brechungsindex aufweisenden Material mit einer ersten Durchtrittsfläche (F1) für das Strahlenbündel und
- einem flächigen zweiten Reflexionselement mit einem einen zweiten Brechungsindex aufweisenden Material mit einer zweiten Durchtrittsfläche (F2) für das Strahlenbündel,
- wobei das erste und das zweite Reflexionselement bezüglich einer Referenzachse (RA) angeordnet sind und wobei die Referenzachse (RA) zwischen erstem und zweiten Reflexionselement verläuft, insbesondere mit
• parallel zueinander und
• parallel zur Referenzachse (RA) ausgerichteter erster und zweiter Durchtrittsfläche (F1,F2),
- wobei das erste und das zweite Reflexionselement eine erste bzw. eine zweite Additionskonstante aufweisen,
**dadurch gekennzeichnet, dass**
die Laufzeit des Strahlenbündels innerhalb des ersten bzw. zweiten Materials einer doppelten Laufzeit des Strahlenbündels in Luft von der ersten bzw. zweiten Durchtrittsfläche (F1,F2) zur Referenzachse (RA) entspricht.

2. Zweiseitiger Reflektor nach Anspruch 1,
**dadurch gekennzeichnet, dass**
das erste und/oder das zweite Reflexionselement so ausgebildet sind, dass das Strahlenbündel bei der Reflexion homogenisiert wird, insbesondere durch eine Vielzahl von Reflexionspunkten.

3. Zweiseitiger Reflektor nach einem der Ansprüche 1 oder 2,
**dadurch gekennzeichnet, dass**
das erste und/oder zweite Reflexionselement eine Vielzahl von Prismen oder Tripeln aufweist.

4. Zweiseitiger Reflektor nach einem der vorhergehenden Ansprüche, **dadurch gekennzeichnet, dass** das erste und/oder zweite Reflexionselement als Kunststoff-Spritzgussteile ausgebildet ist.

5. Zweiseitiger Reflektor nach einem der vorhergehenden Ansprüche, **dadurch gekennzeichnet, dass** beide Reflexionselemente als Retroreflektoren ausgebildet sind.

6. Zweiseitiger Reflektor nach einem der vorhergehenden Ansprüche, **dadurch gekennzeichnet, dass** das zweite Reflexionselement einen, insbesondere um wenigstens eine Grössenordnung, schwächeren Reflexionsgrad aufweist als das erste Reflexionselement.

7. Zweiseitiger Reflektor nach einem der vorhergehenden Ansprüche, **dadurch gekennzeichnet, dass**
beide Reflexionselemente identisch ausgebildet sind, insbesondere als
- Reflexfolie oder
- Katzenauge (3',3'').

8. Zweiseitiger Reflektor nach einem der Ansprüche 1 bis 6, **dadurch gekennzeichnet, dass**
- das erste Reflexionselement ein Katzenauge (3',3") und
- das zweite Reflexionselement eine Reflexfolie umfasst.

9. Zweiseitiger Reflektor nach einem der vorhergehenden Ansprüche,
**dadurch gekennzeichnet, dass**
die beiden Reflexionselemente mittel- oder unmittelbar um eine erste und/oder zweite Drehachse drehbar gelagert sind.

10. Zweiseitiger Reflektor nach Anspruch 9,
**dadurch gekennzeichnet, dass**
die erste Drehachse senkrecht die zweite Drehachse schneidet, wobei der Schnittpunkt der Drehachsen im Wesentlichen auf der Verbindungslinie zwischen den Flächenschwerpunkten der beiden Durchtrittsflächen (F1,F2) liegt.

11. Zweiseitiger Reflektor nach einem der vorhergehenden Ansprüche,
**dadurch gekennzeichnet, dass**
dem Reflektor ein Rahmen (R) für die Reflexionselemente zugeordnet ist.

12. Zweiseitiges Zielobjekt mit einem zweiseitigen Reflektor nach einem der vorhergehenden Ansprüche,
**dadurch gekennzeichnet, dass**
den Reflexionselementen mehrere Markierungen (8), über die ein Zielzentrum (7) bestimmbar ist, mittel- oder unmittelbar zugeordnet sind.

13. Zweiseitiges Zielobjekt nach Anspruch 12,
**dadurch gekennzeichnet, dass**
das Zielzentrum (7) im Wesentlichen auf der Verbindungslinie durch die Flächenschwerpunkte der beiden Durchtrittsflächen (F1,F2) liegt.

14. Verwendung eines zweiseitigen Reflektors nach einem der Ansprüche 1 bis 11 zur Markierung von Zielen bei geodätischen oder Bau-Vermessungsaufgaben.

## Claims

1. Two-sided geodetic reflector for reflection of a diffraction-limited optical beam, in particular for geodetic, construction and industrial surveying using rangefinders designed for reflectorless measurement, comprising
- a planar first reflection element comprising a material having a first refractive index and having a first passage area (F1) for the beam and
- a planar second reflection element comprising material having a second refractive index and having a second passage area (F2) for the beam,
- the first and the second reflection elements being arranged relative to a reference axis (RA) and the reference axis (RA) running between first and second reflection elements, in particular having first and second passage areas (F1, F2) oriented
• parallel to one another and
• parallel to the reference axis (RA),
- the first and the second reflection elements having a first and a second addition constant, respectively,
**characterized in that** the transit time of the beam within the first and second material corresponds to twice the transit time of the beam in air from the first and second passage area (F1, F2), respectively, to the reference axis (RA).

2. Two-sided reflector according to Claim 1, **characterized in that** the first and/or second reflection element are formed in such a way that the beam is homogenised on reflection, in particular by a multiplicity of reflection points.

3. Two-sided reflector according to either of Claims 1 and 2, **characterized in that** the first and/or second reflection element has a multiplicity of prisms or triple prisms.

4. Two-sided reflector according to any of the preceding claims, **characterized in that** the first and/or second reflection element is in the form of plastic injection-moulded parts.

5. Two-sided reflector according to any of the preceding claims, **characterized in that** both reflection elements are in the form of retroreflectors.

6. Two-sided reflector according to any of the preceding claims, **characterized in that** the second reflection element has a reflectivity which is weaker, in particular by at least one order of magnitude, than the first reflection element.

7. Two-sided reflector according to any of the preceding claims, **characterized in that** the two reflection elements are identically formed, in particular as
- reflective film or
- a cat's eye (3', 3").

8. Two-sided reflector according to any of Claims 1 to 6, **characterized in that**
- the first reflection element comprises a cat's eye (3', 3") and
- the second reflection element comprises a reflective film.

9. Two-sided reflector according to any of the preceding claims, **characterized in that** the two reflection elements are rotatably mounted indirectly or directly around a first and/or second axis of rotation.

10. Two-sided reflector according to Claim 9, **characterized in that** the first axis of rotation intersects the second axis of rotation perpendicularly, the point of intersection of the axes of rotation being substantially on the connecting line between the centres of area of the two passage areas (F1, F2).

11. Two-sided reflector according to any of the preceding claims, **characterized in that** a frame (R) for the reflection elements is coordinated with the reflector.

12. Two-sided target object having a two-sided reflector according to any of the preceding claims, **characterized in that** a plurality of marks (8), via which the target centre (7) can be determined, are indirectly or directly coordinated with the reflection elements.

13. Two-sided target object according to Claim 12, **characterized in that** the target centre (7) is substantially on the connecting line through the centres of area of the two passage areas (F1, F2).

14. Use of a two-sided reflector according to any of Claims 1 to 11 for marking targets in geodetic or construction surveying tasks.

## Revendications

1. Réflecteur géodésique à deux faces, pour la réflexion d'un faisceau de rayons optique limité en diffraction, en particulier pour l'arpentage géodésique, concernant la technique de construction et industriel, avec des télémètres conçus pour mesurer sans réflecteur, comprenant :
- un premier élément à réflexion plat, avec un matériau présentant un premier indice de réfraction, ayant une première surface de passage (F1) pour le faisceau de rayons, et
- un deuxième élément à réflexion plat, avec un matériau présentant un deuxième indice de réfraction, ayant une deuxième surface de passage (F21) pour le faisceau de rayons,
- le premier et le deuxième élément à réflexion étant disposés par rapport à un axe de référence (RA), et l'axe de référence (RA) s'étendant entre le premier et le deuxième élément à réflexion, en particulier avec :
une première et une deuxième surfaces de passage (F1, F2) orientées
• parallèlement entre elles, et
• parallèlement à l'axe de référence (RA),
- le premier et le deuxième élément à réflexion présentant une première, respectivement une deuxième constante d'addition,
**caractérisé en ce que**
le temps de parcours du faisceau de rayons, à l'intérieur du premier ou du deuxième matériau, correspondant à un temps de parcours doublé du faisceau de rayons dans l'air, en allant de la première ou de la deuxième surface de passage (F1, F2) à l'axe de référence (RA).

2. Réflecteur à deux faces selon la revendication 1, **caractérisé en ce que** le premier et/ou le deuxième élément à réflexion étant réalisé(s) de manière que le faisceau de rayons soit homogénéisé lors de la réflexion, en particulier du fait d'une pluralité de points de réflexion.

3. Réflecteur à deux faces selon l'une des revendications 1 ou 2, **caractérisé en ce que** le premier et/ou le deuxième élément à réflexion présente(nt) une pluralité de prismes ou de prismes triples.

4. Réflecteur à deux faces selon l'une des revendications précédentes, **caractérisé en ce que** le premier et/ou le deuxième élément à réflexion est/sont réalisé(s) de pièces moulées par injection, en matière synthétique.

5. Réflecteur à deux faces selon l'une des revendications précédentes, **caractérisé en ce que** les deux éléments à réflexion sont réalisés sous forme de rétroréflecteurs.

6. Réflecteur à deux faces selon l'une des revendications précédentes, **caractérisé en ce que** le deuxième élément à réflexion présente un degré de réflexion plus faible, en particulier d'au moins un ordre de grandeur, que le premier élément à réflexion.

7. Réflecteur à deux faces selon l'une des revendications précédentes, **caractérisé en ce que** les deux éléments à réflexion sont de configuration identique, en particulier sont réalisés sous forme de :
- feuille réflex, ou
- de catadioptre (3', 3").

8. Réflecteur à deux faces selon l'une des revendications 1 à 6, **caractérisé en ce que**
- le premier élément à réflexion est un catadioptre (3', 3"), et
- le deuxième élément à réflexion comprend une feuille réflex.

9. Réflecteur à deux faces selon l'une des revendications précédentes,
**caractérisé en ce que**
les deux éléments à réflexion sont montés à rotation, indirectement ou directement, autour d'un premier et/ou d'un deuxième axe de rotation.

10. Réflecteur à deux faces selon la revendication 9, **caractérisé en ce que**
le premier axe de rotation coupe perpendiculairement le deuxième axe de rotation, le point d'intersection des axes de rotation étant situé sensiblement sur la ligne de liaison tracée entre les barycentres de surface des deux surfaces de passage (F1, F2).

11. Réflecteur à deux faces selon l'une des revendications précédentes,
**caractérisé en ce qu'**
un cadre (R), pour les éléments à réflexion, est associé au réflecteur.

12. Mire à deux faces, munie d'un réflecteur à deux faces selon l'une des revendications précédentes,
**caractérisé en ce que**
plusieurs marquages (8), par l'intermédiaire desquels un centre de mire (7) est susceptible d'être déterminé, sont, indirectement ou directement, associés aux éléments à réflexion.

13. Mire à deux faces selon la revendication 12, **caractérisé en ce que** le centre de mire (7) est situé sensiblement sur la ligne de liaison passant par les barycentres de surface des deux surfaces de passage (F1, F2).

14. Utilisation d'un réflecteur à deux faces selon l'une des revendications 1 à 11, pour le marquage de cibles ou mires, dans le cadre de tâches d'arpentage géodésique ou de relevé de constructions.
